# EUROPEAN PATENT SPECIFICATION

(11) **EP 1 747 894 B1**
(45) Date of publication and mention of the grant of the patent: **17.09.2008**
(21) Application number: 06015608.0
(22) Date of filing: 26.07.2006
(51) Int. Cl.: B41J 11/00, B41J 13/00

(54) **System and method for optically detecting media feeding malfunctions in an image forming apparatus**
System und Verfahren zur optischen Detektion einer Störung der Medienzuführung in einem Bilderzeugungsgerät
Système et procédé de détection optique d'alimentation des feuilles dans un appareil de formation d'image

(30) Priority: 28.07.2005 US 192633
(43) Date of publication of application: 31.01.2007
(73) Proprietor: Avago Technologies General IP (Singapore) Pte. Ltd., Singapore 768923 (SG)
(72) Inventor: Ertel, John P., Half Moon Bay California 94019 (US); Feldmeier, David C., Sunnyvale California 94085 (US); Rajaiah, Seela Raj D., Penang Malaysia 11400 (MY); Tan, Boon Keat, Penang Malaysia 11700 (MY); Brosnan, Michael John, Fremont California 94536 (US)
(74) Representative: Dilg, Haeusler, Schindelmann Patentanwaltsgesellschaft mbH

(56) References cited:
- US-A1- 2005 024 413
- US-B1- 6 222 174
- US-B1- 6 281 882

## Description

### BACKGROUND OF THE INVENTION

Computer printers, as well as other image forming apparatus such as copiers, need to transport one or more successive sheets of paper from a paper tray to a print cartridge, such as an inkjet cartridge or a laser toner cartridge, during a printing operation. The transporting of sheets of paper is performed by a feeding mechanism of the printer, which includes a number of rollers to drive the sheets of paper along a paper feeding path from the paper tray to the print cartridge. Due to the mechanical nature of the paper transporting operation, all printers are susceptible to occasional paper feeding malfunctions, i.e., paper jams, during a printing operation.

When a paper jam occurs, a printer will continue to operate until the paper jam is detected. Consequently, the printer will continue to dispense ink or toner and continue to move successive sheets of paper until the paper jam is detected and the printing operation is suspended. Thus, it is desirable to detect a paper jam as soon as possible to minimize the waste of printer consuamables, such as ink, toner and sheets of paper.

A conventional technique to detect a paper jam in a printer is to place one or more mechanical sensors along the paper feeding path of the printer to determine whether or not sheets of paper are moving correctly along the paper feeding path. As the sheets of paper are driven through the paper feeding path by the feeding mechanism, each sheet of paper is expected to reach a particular mechanical sensor. If the sensor does not detect the sheet of paper when it should, then the printer can assume that a paper jam has occurred and execute a predetermined procedure, which may include activating a paper jam indicator as well as suspending the printing operation.

Although this conventional paper jam technique is effective in detecting paper jams, there is a significant time delay between the occurrence of a paper jam and the detection of the paper jam. Thus, the printer will continue with the printing operation during this time delay, which result in a waste of printer consumables.

In view of this concern, there is a need for a system and method for detecting a paper jam more quickly.

US 2005/024413 A1 relates to a method of detecting skew of print media fed along a media feed path of a hard copy device, the method comprising the steps of (a) generating a first image of one or more features associated with a portion of print media at a first location along the feed path, (b) feeding the print media along a media feed path (c) generating a second image of the one or more features at a second location along a feed path, and (d) comparing the first and second images of the one or more features to determine if the orientation of the media relative to the feed path has changed between the imaging steps.

### SUMMARY OF THE INVENTION

A system and method for optically detecting media feeding malfunctions in an image forming apparatus captures images of a surface of a sheet of media as image signals to detect positional changes of the sheet of media. The detected positional changes are used to determine that a media feeding malfunction has occurred when the positional changes satisfy a predefined condition. This optical detecting technique allows for a media feeding malfunction, in a direction normal to the surface of the sheet of media, to be detected quickly so that waste of consumables used by the image forming apparatus is minimized.

A method for optically detecting media feeding malfunctions in an image forming apparatus in accordance with an embodiment of the invention comprises capturing images of a surface of a sheet of media being transported along a media feeding path as image signals, processing the image signals of the surface of the sheet of media to detect positional changes of the sheet of media, and determining that a media feeding malfunction ,in a direction normal to the surface of the sheet of media, has occurred when the positional changes satisfy a predefined condition.

A system for optically detecting media feeding malfunctions in an image forming apparatus in accordance with an embodiment of the invention comprises an optical movement tracking sensor positioned along a media feeding path to capture images of a surface of a sheet of media, the optical movement tracking sensor including an array of photosensitive elements that captures the images of the surface of the sheet of media as image signals, and at least one processing circuit to process the image signals to detect positional changes of the sheet of media and to determine that a media feeding malfunction, in a direction normal to the surface of the sheet of media, has occurred when the positional changes satisfy a predefined condition.

An image forming apparatus in accordance with an embodiment of the invention comprises a print cartridge to deposit an image forming material onto sheets of media, a feeding mechanism to move the sheets of media along a media feeding path, an optical movement tracking sensor positioned along the media feeding path to capture images of a surface of a sheet of media, the optical movement tracking sensor including an array of photosensitive elements that captures the images of the surface of the sheet of media as image signals, and at least one processing circuit to process the image signals to detect positional changes of the sheet of media and to determine that a media feeding malfunctionin a direction normal to the surface of the sheet of media, has occurred when the positional changes satisfy a predefined condition.

Other aspects and advantages of the present invention will become apparent from the following detailed description, taken in conjunction with the accompanying drawings, illustrated by way of example of the principles of the invention.

### BRIEF DESCRIPTION OF THE DRAWINGS

Fig. 1 is a diagram of an image forming apparatus in accordance with an embodiment of the invention.

Fig. 2 is a diagram of some of the components of the image forming apparatus of Fig. 1, including a media feeding malfunction detection system in accordance with an embodiment of the invention.

Fig. 3 is a diagram of an optical movement tracking sensor of the media feeding malfunction detection system in accordance with an embodiment of the invention.

Figs. 4A and 4B illustrate trajectories of a laser beam when a sheet of media is at different distances from a photosensor array of an optical movement tracking sensor.

Fig. 5 is a diagram of a feeding mechanism that uses a realigning technique in accordance with an embodiment of the invention.

Fig. 6 is a process flow diagram of a method for optically detecting media feeding malfunctions in an image forming apparatus in accordance with an embodiment of the invention.

### DETAILED DESCRIPTION

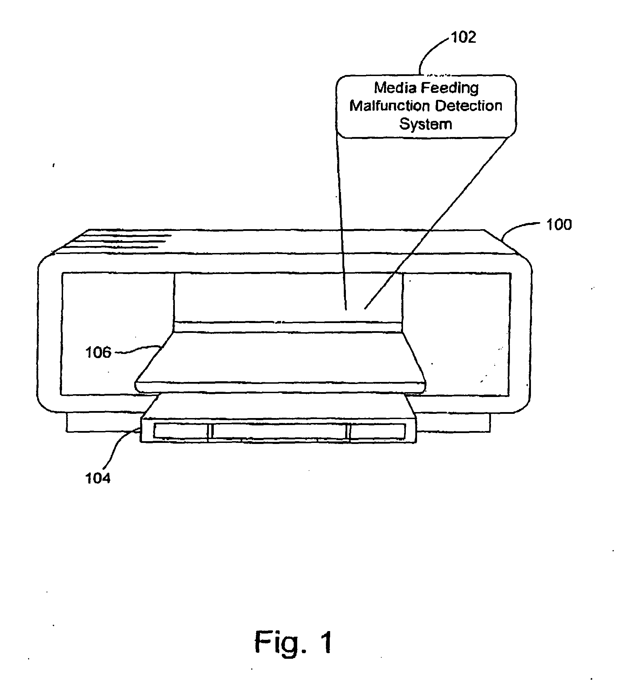

With reference to Fig. 1, an image forming apparatus 100 in accordance with an embodiment of the invention is described The image forming apparatus 100 is illustrated and described herein as a computer printer. However, the image forming apparatus 100 may be any type of an image forming apparatus, such as a copier, a fax machine, a ticket printer or a receipt printer. The image forming apparatus 100 may use inkjet or laser jet technology to print text, graphics, pictures and/or other images on sheets of media, such as paper, fabric, plastic or any other medium on which images can be printed. The image forming apparatus 100 includes a media feeding malfunction detection system 102, which detects a media feeding malfunction, e.g., a paper jam, by monitoring positional changes of a sheet of media as that sheet of media is transported along a media feeding path within the image forming apparatus 100. As described in more detail below, the monitoring of positional changes of a sheet of media is achieved using one or more optical movement tracking sensors, which use surface features on the sheet of media to determine relative positional changes, or movement, of the sheet of media When the detected positional changes of the sheet of media satisfy one or more predefined conditions, then a determination is made that a media feeding malfunction has occurred. Using this technique in accordance with the invention, an occurrence of a media feeding malfunction can be detected more quickly than a conventional detection technique that uses one or more mechanical sensors. As a result, less consumabies used by the image forming apparatus 100 are wasted when there is a media feeding malfunction.

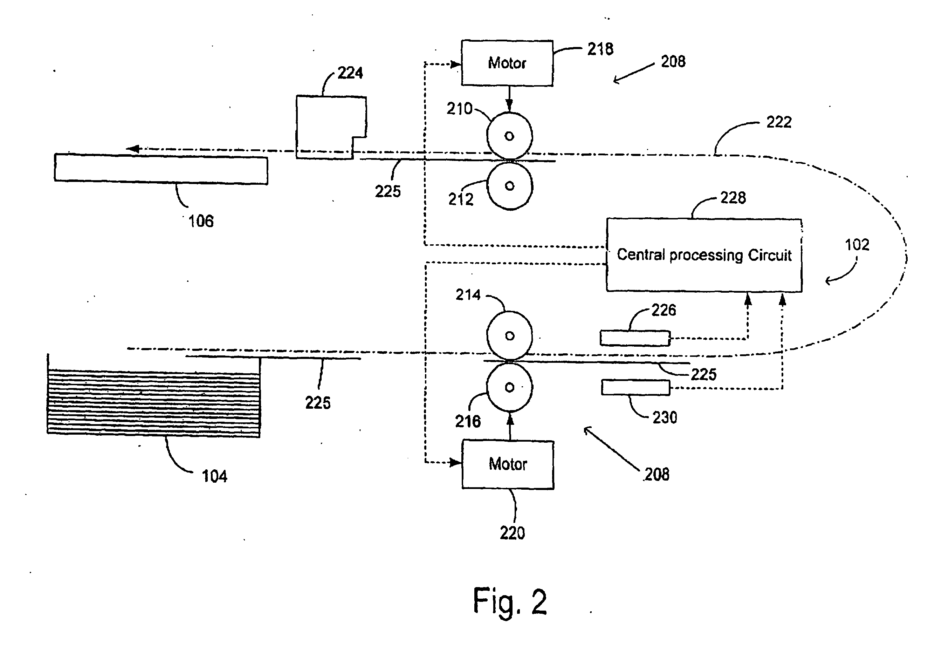

As shown in Fig. 1, the image forming apparatus 100 includes the media feeding malfunction detection system 102, a media tray 104 and an output platform 106. The media tray 104 is used to store new sheets of media to be used by the image forming apparatus 100. The output platform 106 is used to place Printed sheets of media. Thus, during a printing operation, one or more new sheets of media are transported within the image forming apparatus 100 from the media tray 104 to the output platform 106 by a feeding mechanism 208 (not shown in Fig. 1) of the image forming apparatus. The feeding mechanism 208 is illustrated in Fig. 2, which shows some of the internal components of the image forming apparatus 100. As shown in Fig. 2, the feeding mechanism 208 of the image forming apparatus 100 includes rollers 210, 212, 214 and 216 and motors 218 and 220. The rollers 210, 212, 214 and 216 are positioned along a media feeding path 222, which begins from the media tray 104 and ends at the output platform 106. The media feeding path 222 passes by a print cartridge 224 of the image forming apparatus 100. The print cartridge 224 may be an inkjet cartridge or a toner cartridge that operates to deposit an image forming material, e.g., ink or toner, onto sheets of media being transported along the media feeding path 222. The print cartridge 224 may be designed to be displaced to scan each sheet of media during a printing operation.

The rollers 210, 212, 214 and 216 of the feeding mechanism 208 operate to move sheets of media 225 along the media feeding path 222 during a printing operation. The motors 218 and 220 are connected to the rollers 210, 212, 214 and 216 to rotate the rollers to move the sheets of paper along the media feeding path 222. As an example, the motors 218 and 220 may be connected to the rollers 210, 212, 214 and 216 via belts and/or gears (not shown) to rotate the rollers. The motors 218 and 220 may be stepper motors or DC drive motors. In Fig. 2, the motor 218 is connected to the rollers 210 and 212, while the motor 220 is connected to the rollers 214 and 216. Thus, the motor 218 rotates the rollers 210 and 212, while the motor 220 rotates the rollers 214 and 216. Although only four rollers and two motors are shown in Fig. 2, the feeding mechanism 208 of the image forming apparatus 100 may include fewer or more rollers and motors. Furthermore, each motor of the feeding mechanism 208 may be connected to different number of rollers to rotate one or more rollers.

The media feeding malfunction detection system 102 of the image forming apparatus 100 includes an optical movement tracking sensor 226 and a central processing circuit 228. The optical movement tracking sensor 226 is positioned along the media feeding path 222 to optically monitor the movements of the sheets of media 225 as the sheets of media are being transported along the media feeding path by the feeding mechanism 208. The optical movement tracking sensor 226 monitors the movements of a sheet of media by capturing image information of a surface of the sheet of media, processing the image information to detect positional changes of the sheet of media and outputting the detected positional changes as a digital output signal. The digital output signal is transmitted to the central processing circuit 228, which processes the received signal to determine whether the sheet of media is moving properly along the media feeding path 222 or whether there is a media feeding malfunction, e.g., a paper jam. The central processing circuit 228 also controls the motors 218 and 220 of the feeding mechanism 208 to rotate the rollers 210, 212,214 and 216 when one or more sheets of media are to be transported along the media feeding path 222. As used herein, a processes circuit can be any type of a processing circuit, which uses software, firmware and/or hardwired logic to perform one or more tasks.

As shown in Fig. 2, the media feeding malfunction detection system 102 may include a second optical movement tracking sensor 230, which may be similar in structure and function to the first optical movement tracking sensor 226. Using the optical movement tracking sensors 226 and 230, both sides of a sheet of media, i.e., the upper and lower surfaces of the sheet of media, can be monitored. The optical movement tracking sensor 226 is positioned to monitor the upper surface of a sheet of media, while the optical movement tracking sensor 230 is positioned to monitor the lower surface of the sheet of media. Although only two optical movement tracking sensors are shown in Fig. 2, in other embodiments, the media feeding malfunction detection system 102 may include additional optical movement tracking sensors along the media feeding path 222, especially if the media feeding path is significantly long. In some embodiments, the media feeding malfunction detection system 102 may include one or more optical movement tracking sensors attached to the bottom of the print cartridge 224.

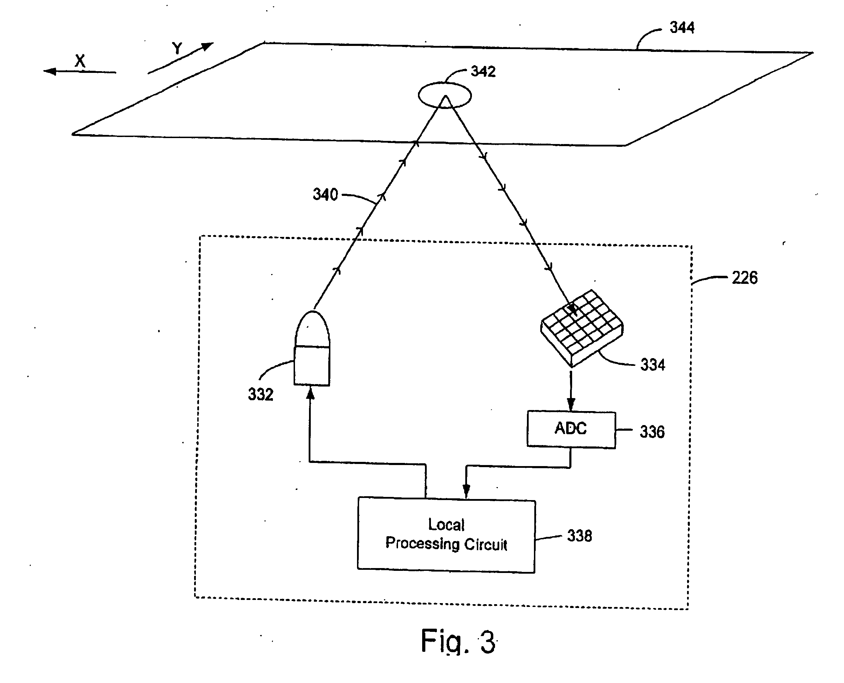

The optical movement tracking sensor 226 is now described with reference to Fig. 3, which illustrates the components of the sensor. As shown in Fig. 3, the optical movement tracking sensor 226 includes a light source 132, a photosensor array 334, an analog-to-digital converter (ADC) 336 and a local processing circuit 338. The light source 332 provides a beam of light 340 that is used to illuminate a region 342 on a surface of a sheet of media 344 being monitored. The light source 332 may be a light emitting diode (LED), a laser diode or any other device that can generate a beam of light The photosensor array 334 is an array of photosensitive elements that can image a portion of the surface of the sheet of media 344 using a reflected beam of light received from that surface portion of the sheet of media. As used herein, an image of a media surface may simply mean light reflected from the media surface, which is received by the photosensor array 334. As an example, the photosensor array 334 may be a charge coupled device (CCD) array or a complementary metal oxide semiconductor (CMOS) array. Each photosensitive element in the photosensor array 334 generates an analog image signal as an accumulated electrical charge in response to the intensity of received light at that photosensitive element The analog image signals generated by the photosensitive elements of the photosensor array 334 are converted to digital image signals by the ADC 336 and transmitted to the local processing circuit 338 for signal processing.

The image signals of a surface portion of a sheet of media are captured in frames, where a frame includes a set of simultaneously captured image signals from the photosensitive elements in the photosensor array 334. Sheets of media have surface features, which when illuminated, can be picked up by the photosensor array 334. The captured frames of image signals include image information of these features on the surface of the sheet of media being monitored. The image capture frame rate is programmable.

The local processing circuit 338 receives the successive frames of image signals and processes the frames to determine positional changes or movement of the sheet of media 344. In particular, common features in the successive frames are correlated to determine the relative movement of the sheet of media 344. The movement of the sheet of media 344 is expressed in terms of changes in the X and Y direction. As used herein, the X direction is parallel to the direction of the media feeding path 222, while the Y direction is perpendicular to the direction of the media feeding path and parallel to the surface of the sheet of media 344. More detailed description of exemplary image-based movement tracking techniques are provided in U.S. Patent Number 5,644,139, entitled "Navigation technique For Detecting Movement Of Navigation Sensors Relative To An Object", and U.S. Patent Number 6,222,174, satitled "Method of Correlating Immediately Acquired And Previously Stored Feature Information For Motion Sensing", both of which are assigned to the assignee of the current invention.

Turning back to Fig. 2, the central processing circuit 228 of the media feeding malfunction detection system 102 uses the media movement information provided by one or more optical movement tracking sensors, such as the sensors 226 and 230, to determine whether a media feeding malfunction has occurred. Usually, a sheet of media moves straight along the media feeding path 222 (i.e., in the X direction) with neglible or minimal amount of rotation or movement perpendicular to the media feeding path (i.e., in the Y direction). Often when a media feeding malfunction occurs, one part of the sheet of media stops moving while another part of the sheet of media continues to move, at least for a short period of time. In many cases, the fact that different parts of the sheet of media are moving at different speeds will cause parts of the sheet of media to rotate, to move in a direction perpendicular to the media feeding path 222 or to buckle, sometimes causing one or more z-folds. The central processing circuit 228 determines that a media feeding malfunction has occurred when one or more of these indications of a media feeding malfunction are detected.

The central processing circuit 228 determines that a media feeding malfunction has occurred when there is no movement of a sheet of media when that sheet of media should be moving. That is, when the central processing circuit 228 activates some or all of the motors 218 and 220 of the feeding mechanism 208 to rotate some or all of the rollers 210, 212, 214 and 216 and the optical movement tracking sensors 228 and 230 detect no media motion when there should be, the central processing circuit 228 determines that a media feeding malfunction has occurred.

The central processing circuit 228 can also determine that a media feeding malfunction has occurred when a sheet of media is moving too slowly in the X direction. The amount of media movement in the X direction can be compared to an expected amount of media motion, which can be correlated to the activation of one of both of the motors 218 and 220 of the feeding mechanism 208. If the motors 218 and 220 are stepper motors, then the number of steps the motors are driven will correspond to a certain amount of media motion. Thus, the number of steps the motors 218 and 220 are driven can be used to determine the expected amount of media motion. If the motors 218 and 220 are DC drive motors, then the amount of current applied to the motors will correspond to a certain amount of media motion. Thus, in this case, the amount of current applied to the motors 218 and 220 can be used to determine the expected amount of media motion. Alternatively, the motors 218 and 220 may include optical encoders to measure the rotation of the motors when activated, which can be used to determine the expected amount of media motion. When the detected amount of motion for a sheet of media is less than the expected amount of media motion, the central processing circuit 228 can determine that a media feeding malfunction has occurred.

The central processing circuit 228 can also determine that a media feeding malfunction has occurred when a sheet of media has significantly rotated or moved in a direction perpendicular to the media feeding path 222, i.e., in the Y direction When one or both of the optical movement tracking sensors 226 and 230 detect a media rotational movement greater than a predetermined rotational threshold, the central processing circuit 228 can determine that a media feeding malfunction has occurred. Similarly, when one or both of the optical movement tracking sensors 226 and 230 detect a media later movement in the Y direction greater than a predetermined movement threshold, the central processing circuit 228 will determine that a media feeding malfunction has occurred.

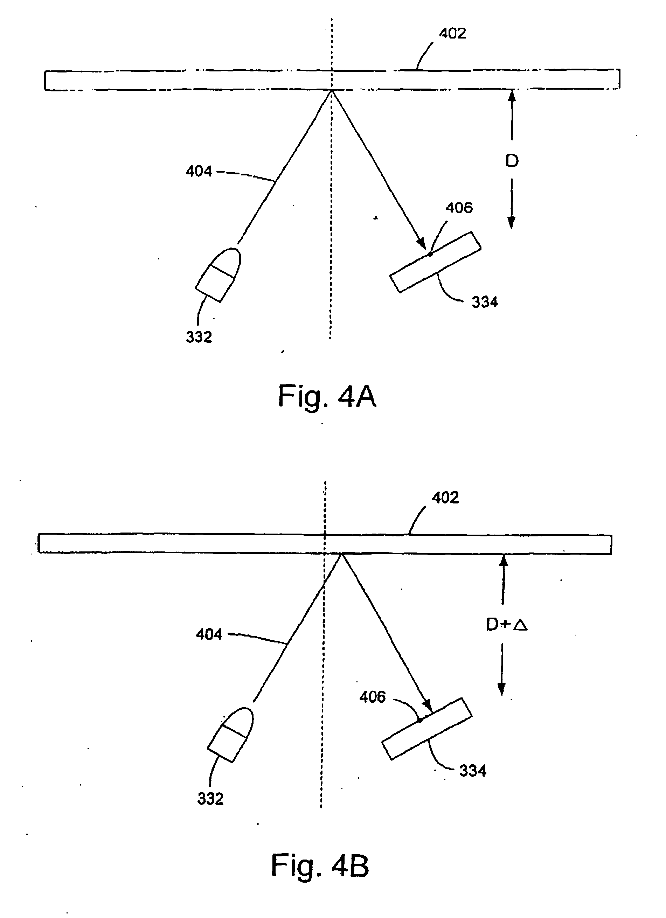

The central processing circuit 228 can also determine that a media feeding malfunction has occurred when a sheet of media has significantly moved in the vertical direction, which is normal to the surface of the sheet of media. Movement in the vertical direction indicates buckling of a sheet of media during a media feeding malfunction. One technique to detect a media feeding malfunction induced buckling is to compare the number of specific surface features of a sheet of media detected by one or both of the optical movement tracking sensors 226 and 230 to an expected number of specific surface features. As a sheet of media moves with respect to an optical movement tracking sensor, an average number of specific surface features are expected to be detected by that sensor. If a light emitting diode is used as the light source of the optical movement tracking sensor, these specific surface features becomes blurred when the sheet of media moves away from the best focus position, i.e., moves toward or away from the optical movement tracking sensor, which decreases the number of the specific surface features that are detected by that sensor. If a laser is used as the light source of the optical movement tracking sensor, these specific surface features becomes less visible when the sheet of media moves away from the best focus position since the reflected laser beam on the photosensor array of the optical movement tracking sensor will shift such that some of the photosensitive elements are not well illuminated. This is due to the fact that the position of the reflected laser beam on the photosensor array will depend on the distance between the sheet of media and the photosensor array. As illustrated in Fig. 4A, when a sheet of media 402 is at an optimal distance (D), the center of the laser beam 404 from the light source 332 will be at a reference point 406 on the photosensor array 334, somewhere near the center of the photosensor array. However, as the sheet of media 402 moves away from this optimal distance, the center of the laser beam 404 will correspondingly shift on the photosensor array 334. As illustrated in Fig. 4B, when the sheet of media 402 is at some distance greater than the optical distance (D+Δ), the center of the laser beam 402 will have shifted away from the reference point 406 on the photosensor array 334. The result is that when the reflected laser beam has significantly shifted from the proper trajectory, some of the photosensitive elements of the photosensor array 334 are not well illuminated, which will reduce the number of specific surface features that are detected by the optical movement tracking sensor. If the number of these specific surface features detected by the optical movement tracking sensors 226 and 230 decreases significantly, then it can be assumed that the sheet of media has moved toward or away from the respective optical movement tracking sensors. Thus, when the specific surface features detected by one or both of the optical movement tracking sensor 226 and 230 falls below a certain threshold, the central processing circuit 228 can determine that a media feeding malfunction has occurred.

If the above detection technique does not work well for certain types of media, the technique may be improved by first determining the expected range of detectable surface features for these types of media based on user media selection or based on initial reading of detected surface features when one of these types of media is first loaded.

There are other methods to determine that the reflected beam of light on the photosensor array of one or both of the optical movement tracking sensors 226 and 230 has shifted. A shift of the beam center can be determined by observing that some photosensor elements, which are not normally illuminated, are in fact illuminated or that some photosensor elements, which are normally illuminated, are in fact not illuminated. Since the lack of illumination at certain photosensor elements could be caused by surface features, several frames should be observed to see if the same photosensor elements are not illuminated, or else look to see whether an entire strip of photosensor elements along an edge of the photosensor array is not illuminated (this is unlikely unless the beam has moved off the center of the photosensor array). Alternatively, the beam diameter can be reduced so that the entire beam is contained within the photosensor array, which means that some of the photosensor elements at the edges or corners of the array will not be illuminated during normal operation. A shift in the beam center can then be detected by observing the shape of the photosensor elements that are illuminated in the photosensor array.

Another technique for detecting a media feeding malfunction induced buckling is to use a signal strength indicator such as the shutter time reported by an automatic exposure algorithm used for the optical movement tracking sensors 226 and 230. When media buckling is sufficiently largo, the optical signal strength received by the photosensor array of the optical movement tracking sensors will decrease due to a shift in the reflected bearn of light on the photosensor array. Thus, when the signal strength indicator is less than a predefined threshold, then the central processing circuit 228 can determine that a media feeding malfunction has occurred.

Another technique for detecting a media feeding malfunction induced buckling is to use a "liftoff detection" method, which is used to detect when an optical computer mouse has been lifted from a work surface. Any liftoff detection method may be used to determine that a sheet of media has moved away from an optical movement tracking sensor, indicating media buckling. A liftoff detection method of interest uses a mechanical shouldered plunger that activates a switch when the plunger moves due to the separation of the optical mouse and the work surface. Another liftoff detection method of interest determines that an optical computer mouse has been lifted from a work surface when the outputs of the photosensor elements in the optical mouse become unifarm. Details of these liftoff detection methods can be found in U.S. Patent Number 6,281,882.

In an embodiment, when a media feeding malfunction due to misalignment of a sheet of media has been detected, the feeding mechanism 108 may be directed to realign the sheet of media to correct the media feeding malfunction. There are different techniques to realign a sheet of media When the sheet of media is misaligned or skewed. One technique is to use a feeding mechanism with multiple rollers that can be independently controlled with respect to rotational speed to rotate a sheet of media to realign the sheet of media Another technique is to use a feeding mechanism with multiple rollers in which at least one of the rollers can be controlled to vary the effective roller diameter to rotate a sheet of media to realign the sheet of media.

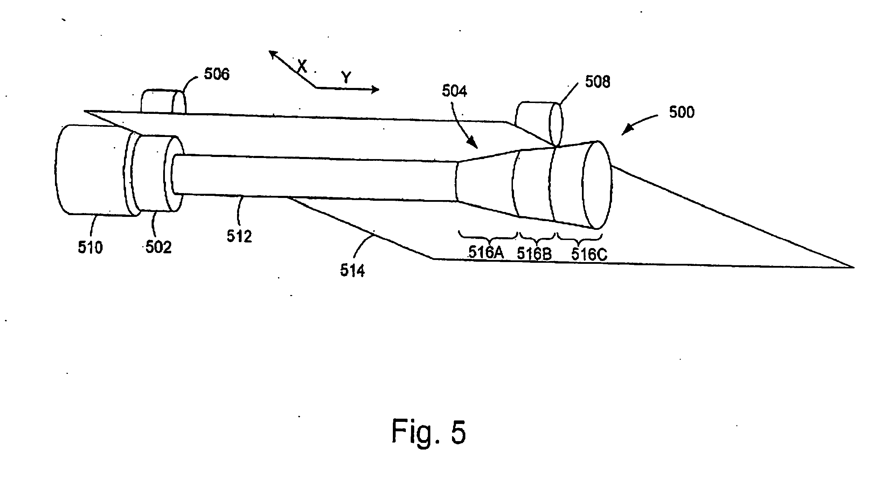

In Fig. 5, a feeding mechanism 500 that uses the latter realigning technique in accordance with an embodiment of the invention is shown. The feeding mechanism 500 includes drive rollers 502 and 504, pressure rollers 506 and 508, and a motor 510. The drive rollers 502 and 504 are connected to a shaft 512, which is connected to the motor 510 that rotates the shaft. The pressure rollers 506 and 508 are positioned to engage the drive rollers 502 and 504, respectively, so that a sheet of media 514 positioned between the drive rollers 502 and 504 and the pressure rollers 506 and 508 is displaced when the drive rollers are rotated by the shaft 512. The drive roller 502 is cylindrical in shape. Thus, the drive roller 502 has a fixed diameter. However, the other drive roller 504 is tapered such that the diameter of the roller 504 gets progressively smaller toward one end, i.e., the end closest to the motor 510. Thus, the drive roller 504 has a varying diameter. The drive roller 502 is fixed on the shaft 512. However, the tapered drive roller 504 can be moved along the length of the shaft 512 so that the effective diameter of the tapered roller, i.e., the diameter of the tapered roller at a region engaged with the pressure roller 508. The tapered roller 504 can be divided into three regions 516A, 516B and 516C. In the region 516B, the diameter of the tapered roller 504 is same as the diameter of the drive roller 502. In the region 516A, the diameter of the tapered roller 504 is smaller than the diameter of the drive roller 502. In the region 516C, the diameter of the tapered roller 504 is larger than the diameter of the drive roller 502.

During normal operation, the tapered roller 504 is axially positioned on the shaft 512 such that the region 516B is engaged with the pressure roller 508. Since the diameter of the tapered roller 504 is same as the diameter of the drive roller 502 at the region 516B, the sheet of paper 514 will be driven straight along the X direction by the drive rollers 502 and 504 without any rotation or skewing. However, when the sheet of media 514 is misaligned, the tapered roller 504 is moved along the length of the shaft 512 so that the region 516A or 516C of the tapered roller is engaged with the pressure roller 508. If the region 516A of the tapered roller 504 is engaged with the pressure roller 508, the sheet of media 514 will be rotated in the Y direction since the diameter of the tapered roller is smaller than the diameter of the drive roller 502 at the region 516A. If the region 516C of the tapered roller 502 is engaged with the pressure roller 508, the sheet of media 514 will be rotated in the negative Y direction since the diameter of the tapered roller is larger than the diameter of the drive roller 502 at the region 516C. Using the feedback from the optical movement tracking sensors 226 and 228, the axial position of the tapered roller 502 can be adjusted to maintain a straight media path for a sheet of media being driven by the feeding mechanism 500 and correct for any skewing of the sheet of media.

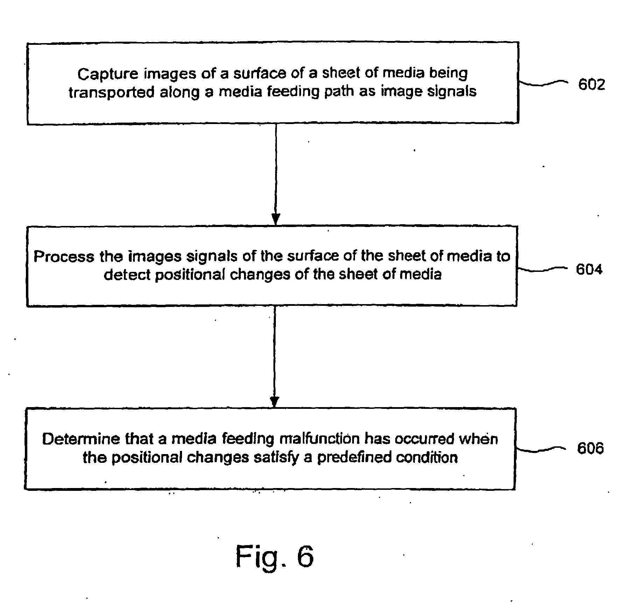

A method for detecting media feeding malfunctions, e.g., paper jams, in an image forming apparatus in accordance with an embodiment of the invention is described with reference to a process flow diagram of Fig. 6. At block 602, images of a surface of a sheet of media being transported along a media feeding path are captured as image signals. Next, at block 604, the image signals of the surface of the sheet of media are processed to detect positional changes of the sheet of media. Next, at block 606, a media feeding malfunction is determined to have occurred when the positional changes satisfy a predefined condition.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A method for optically detecting media feeding malfunctions in an image forming apparatus (100), the method comprising:
capturing (602) images of a surface of a sheet of media (344, 402, 514) being transported along a media feeding path (222) as image signals;
processing (604) the image signals of the surface of the sheet of media (344, 402, 514) to detect positional changes of the sheet of media (344, 402, 514); and
determining (606) that a media feeding malfunction has occurred when the positional changes satisfy a predefined condition;
**characterized in that**
the determining includes determining that the media feeding malfunction has occurred when the positional changes include a vertical movement in a direction normal to the surface of the sheet of media (344, 402, 514).

2. The method of claim 1 wherein the determining includes determining that the media feeding malfunction has occurred when the positional changes do not correlate with an expected amount of positional changes as a feeding mechanism of the image forming apparatus is commanded to move the sheet of media (344, 402, 514).

3. The method of claim 1 wherein the determining includes determining that the media feeding malfunction has occurred when the positional changes include a rotational movement.

4. The method of claim 1 wherein the determining includes determining that the media feeding malfunction has occurred when the positional changes include a lateral movement, the lateral movement being in a direction perpendicular to the direction of the media feeding path and parallel to the surface of the sheet of media (344, 402, 514).

5. The method of claim 1 wherein the determining further includes detecting optical distortion of light reflected from the surface of the sheet of media to determine whether the positional changes include the vertical movement.

6. The method of claim 1 wherein the determining further includes determining a shift of a reflected light beam received to capture the image signals with respect to a reference point to determine whether the positional changes include the vertical movement.

7. The method of claim 1 wherein the determining includes determining the signal strength of said image signals to determine whether the positional changes include the vertical movement.

8. The method of claim 1 further comprising realigning the sheet of media using the positional changes derived from the image signals to correct the media feeding malfunction.

9. A system (102) for optically detecting media feeding malfunctions in an image forming apparatus (100) comprising:
an optical movement tracking sensor (226) positioned along a media feeding path (222) to capture images of a surface of a sheet of media (344, 402, 514), the optical movement tracking sensor (226) including an array (334) of photosensitive elements that captures the images of the surface of the sheet of media (344, 402, 514) as image signals; and
at least one processing circuit (228, 338) operatively connected to the optical movement tracking sensor (226), the at least one processing circuit (228, 338) being configured to process the image signals to detect positional changes of the sheet of media (344, 402, 514) and to determine that a media feeding malfunction has occurred when the positional changes satisfy a predefined condition;
**characterized in that**
the at least one processing circuit (228, 338) is configured to determine that the media feeding malfunction has occurred when the positional changes include a vertical movement in a direction normal to the surface of the sheet of media (344, 402, 514).

10. The system of claim 9 wherein the at least one processing circuit (228, 338) is configured to determine that the media feeding malfunction has occurred when the positional changes do not correlate with an expected amount of positional changes as a feeding mechanism of the image forming apparatus (100) is commanded to move the sheet of media (344, 402, 514).

11. The system of claim 9 wherein the at least one processing circuit (228, 338) is configured to determine that the media feeding malfunction has occurred when the positional changes include one of a rotational movement and a lateral movement, the lateral movement being in a direction perpendicular to the direction of the media feeding path (222) and parallel to the surface of the sheet of media (344, 402, 514).

12. The system of claim 9 wherein the at least one processing circuit includes a first processing circuit (338) and second processing circuit (228), the first processing circuit (338) being integrated in the optical movement tracking sensor (226), the first processing circuit (338) being configured to detect the positional changes of the sheet of media, the second processing circuit being operatively connected to the first processing circuit, the second processing circuit (228) being configured to determine that the media feeding malfunction has occurred when the positional changes satisfy the predefined condition.

13. The system of claim 9 further comprising a second optical movement tracking sensor (230) positioned along the media feeding path (222) to capture images of a second surface of the sheet of media (344, 402, 514).

14. The system of claim 9 further comprising a feeding mechanism (208, 500) to move the sheet of media along the media feeding path (222), the feeding mechanism (208; 500) being configured to realign the sheet of media (344, 402, 514) to correct the media feeding malfunction.

15. The system of claim 14 wherein the feeding mechanism (208, 500) includes a roller (504) having a varying diameter, the roller being connected to a shaft (512) so that the roller (504) can be moved along the length of the shaft (512) to change the effective diameter of the roller (504) to correct the media feeding malfunction.

16. An image forming apparatus (100) comprising:
a print cartridge (224) to deposit an image forming material onto sheets of media (344, 402, 514);
a feeding mechanism (208, 500) to move the sheets of media (344, 402, 514) along a media feeding path (222); and
a system (102) of claim 9 for optically detecting media feeding malfunctions in the image forming apparatus.

17. The apparatus of claim 16 wherein the at least one processing circuit (228, 338) is configured to determine that the media feeding malfunction has occurred when the positional changes do not correlate with expected positional changes as the feeding mechanism (208, 500) is commanded to move the sheet of media (344, 402, 514).

18. The apparatus (100) of claim 16 wherein
an optical movement tracking sensor (226) includes a light source (332) for illuminating a region (342) on the surface of the sheet of media (344, 402, 514) being monitored; and
the image of a media surface is reflected light from the media surface which is received by the array (334) of photosensitive elements; and
wherein captured frames of image signals include image information of illuminated surface features on the surface of the sheet of media (344, 402, 514) being monitored.

## Patentansprüche

1. Verfahren zum optischen Erfassen von Fehlfunktionen der Datenträgerzuführung in einem Abbildungsgerät (100), wobei das Verfahren folgende Schritte aufweist:
- Aufnehmen (602) von Bildern einer Oberfläche eines Datenträgerblatts (344, 402, 514), das auf einem Datenträger-Zuführungsweg (222) transportiert wird, in Form von Bildsignalen;
- Verarbeiten (604) der Bildsignale der Oberfläche des Datenträgerblattes (344, 402, 514), um Positionsänderungen des Datenträgerblattes (344, 402, 514) zu erfassen; und
- Bestimmen (606), dass eine Fehlfunktion der Datenträgerzuführung aufgetreten ist, wenn die Positionsänderungen eine vorgegebene Bedingung erfüllen;
**dadurch gekennzeichnet, dass**
das Bestimmen ein Bestimmen aufweist, dass die Fehlfunktion der Datenträgerzuführung aufgetreten ist, wenn die Positionsänderungen eine vertikale Bewegung in eine Richtung aufweisen, die zur Oberfläche des Datenträgerblatts (344, 402, 514) normal ist.

2. Verfahren gemäß Anspruch 1, wobei das Bestimmen ein Bestimmen aufweist, dass die Fehlfunktion der Datenträgerzuführung aufgetreten ist, wenn die Positionsänderungen nicht mit einem erwarteten Umfang der Positionsänderungen korrelieren, wenn ein Zuführungsmechanismus des Abbildungsgeräts gesteuert wird, das Datenträgerblatt (344, 402, 514) zu bewegen.

3. Verfahren gemäß Anspruch 1, wobei das Bestimmen ein Bestimmen aufweist, dass die Fehlfunktion der Datenträgerzuführung aufgetreten ist, wenn die Positionsänderungen eine Drehbewegung aufweisen.

4. Verfahren gemäß Anspruch 1, wobei das Bestimmen ein Bestimmen aufweist, dass die Fehlfunktion der Datenträgerzuführung aufgetreten ist, wenn die Positionsänderungen eine laterale Bewegung aufweisen, wobei die laterale Bewegung in eine Richtung geht, die zur Richtung des Datenträgerzuführungswegs rechtwinklig und zur Oberfläche des Datenträgerblatts (344, 402, 514) parallel ist.

5. Verfahren gemäß Anspruch 1, wobei das Bestimmen ferner das Erfassen einer optischen Verzerrung des Lichts aufweist, das von der Oberfläche des Datenträgerblatts reflektiert wird, um zu bestimmen, ob die Positionsänderungen die vertikale Bewegung aufweisen.

6. Verfahren gemäß Anspruch 1, wobei das Bestimmen ferner ein Bestimmen einer Shift eines reflektierten Lichtstrahls aufweist, der empfangen wurde, um die Bildsignale im Verhältnis zu einem Bezugspunkt aufzunehmen, um zu bestimmen, ob die Positionsänderungen die vertikale Bewegung aufweisen.

7. Verfahren gemäß Anspruch 1, wobei das Bestimmen ein Bestimmen der Signalstärke der Bildsignale aufweist, um zu bestimmen, ob die Positionsänderungen die vertikale Bewegung aufweisen.

8. Verfahren gemäß Anspruch 1, ferner aufweisend das Wiederausrichten des Datenträgerblatts unter Verwendung der Positionsänderungen, die von den Bildsignalen abgeleitet werden, um die Fehlfunktion der Datenträgerzuführung zu berichtigen.

9. System (102) zum optischen Erfassen von Fehlfunktionen der Datenträgerzuführung in einem Abbildungsgerät (100), aufweisend:
- einen optischen Bewegungsverfolgungssensor (226), der auf einem Datenträger-Zuführungsweg (222) angeordnet ist, um Bilder einer Oberfläche eines Datenträgerblatts (344, 402, 514) aufzunehmen, wobei der optische Bewegungsverfolgungssensor (226) ein Array (334) von lichtempfindlichen Elementen aufweist, die die Bilder der Oberfläche des Datenträgerblatts (344, 402, 514) als Bildsignale aufnimmt; und
- zumindest einen Verarbeitungsschaltkreis (228, 338), der betriebsmäßig an den optischen Bewegungsverfolgungssensor (226) angeschlossen ist, wobei der zumindest eine Verarbeitungsschaltkreis (228, 338) konfiguriert ist, um die Bildsignale zu verarbeiten, um Positionsänderungen des Datenträgerblatts (344, 402, 514) zu erfassen und um zu bestimmen, dass eine Fehlfunktion der Datenträgerzuführung aufgetreten ist, wenn die Positionsänderungen eine vorgegebene Bedingung erfüllen;
**dadurch gekennzeichnet, dass**
der zumindest eine Verarbeitungsschaltkreis (228, 338) konfiguriert ist, um zu bestimmen, dass die Fehlfunktion der Datenträgerzuführung aufgetreten ist, wenn die Positionsänderungen eine vertikale Bewegung in eine Richtung aufweisen, die zur Oberfläche des Datenträgerblatts (344, 402, 514) senkrecht ist.

10. System gemäß Anspruch 9, wobei der zumindest eine Verarbeitungsschaltkreis (228, 338) konfiguriert ist zu bestimmen, dass die Fehlfunktion der Datenträgerzuführung aufgetreten ist, wenn die Positionsänderungen nicht mit einem erwarteten Umfang von Positionsänderungen korrelieren, wenn ein Zuführungsmechanismus des Abbildungsgeräts (100) gesteuert wird, das Datenträgerblatt (344, 402, 514) zu bewegen.

11. System gemäß Anspruch 9, wobei der zumindest eine Verarbeitungsschaltkreis (228, 338) konfiguriert ist, um zu bestimmen, dass die Fehlfunktion der Datenträgerzuführung aufgetreten ist, wenn die Positionsänderungen eine von einer Drehbewegung und einer lateralen Bewegung aufweist, wobei die laterale Bewegung in eine Richtung geht, die zur Richtung des Datenträgerzuführungswegs (222) rechtwinklig und zur Oberfläche des Datenträgerblatts (344, 402, 514) parallel ist.

12. System gemäß Anspruch 9, wobei der zumindest eine Verarbeitungsschaltkreis einen ersten Verarbeitungsschaltkreis (338) und einen zweiten Verarbeitungsschaltkreis (228) aufweist, wobei der erste Verarbeitungsschaltkreis (338) in den optischen Bewegungsverfolgungssensor (226) integriert ist, wobei der erste Verarbeitungsschaltkreis (338) konfiguriert ist, die Positionsänderungen des Datenträgerblatts zu erfassen, wobei der zweite Verarbeitungsschaltkreis betriebsmäßig an den ersten Verarbeitungsschaltkreis angeschlossen ist, wobei der zweite Verarbeitungsschaltkreis (228) konfiguriert ist zu bestimmen, dass die Fehlfunktion der Datenträgerzuführung aufgetreten ist, wenn die Positionsänderungen die vorgegebene Bedingung erfüllen.

13. System gemäß Anspruch 9, ferner aufweisend einen zweiten optischen Bewegungsverfolgungssensor (230), der entlang dem Datenträgerzuführungsweg (222) angeordnet ist, um Bilder auf einer zweiten Oberfläche des Datenträgerblatts (344, 402, 514) aufzunehmen.

14. System gemäß Anspruch 9, ferner aufweisend einen Zuführungsmechanismus (208, 500), um das Datenträgerblatt auf dem Datenträgerzuführungsweg (222) zu bewegen, wobei der Zuführungsmechanismus (208, 500) konfiguriert ist, um das Datenträgerblatt (344, 402, 514) wiederauszurichten, um die Fehlfunktion der Datenträgerzuführung zu berichtigen.

15. System gemäß Anspruch 14, wobei der Zuführungsmechanismus (208, 500) eine Rolle (504) aufweist, die einen variablen Durchmesser hat, wobei die Rolle an eine Welle (512) angeschlossen ist, so dass die Rolle (504) an der Welle (512) entlang bewegt werden kann, um den wirksamen Durchmesser der Rolle (504) zu ändern, um die Fehlfunktion der Datenträgerzuführung zu berichtigen.

16. Abbildungsgerät (100), aufweisend:
- eine Druckpatrone (224), um ein Abbildungsmaterial auf Datenträgerblätter (344, 402, 514) aufzutragen;
- einen Zuführungsmechanismus (208, 500), um die Datenträgerblätter (344, 402, 514) entlang eines Datenträgerzuführungswegs (222) zu bewegen; und
- ein System (102) gemäß Anspruch 9 zum optischen Erfassen von Fehlfunktionen der Datenträgerzuführung in dem Abbildungsgerät.

17. Gerät gemäß Anspruch 16, wobei der zumindest eine Verarbeitungsschaltkreis (228, 338) konfiguriert ist, zu bestimmen, dass die Fehlfunktion der Datenträgerzuführung vorgekommen ist, wenn die Positionsänderungen nicht mit einem erwarteten Umfang von Positionsänderungen korrelieren, wenn der Zuführungsmechanismus (208, 500) gesteuert wird, das Datenträgerblatt (344, 402, 514) zu bewegen.

18. Gerät (100) gemäß Anspruch 16, wobei
- ein optischer Bewegungsverfolgungssensor (226) eine Lichtquelle (332) aufweist, um einen Bereich (342) auf der Oberfläche des überwachten Datenträgerblatts (344, 402, 514) zu beleuchten; und
- das Bild einer Datenträgeroberfläche von der Datenträgeroberfläche reflektiertes Licht ist, das von dem Array (334) lichtempfindlicher Elemente empfangen wird; und
wobei aufgenommene Frames von Bildsignalen Bildinformationen der beleuchteten Oberflächenmerkmale auf der Oberfläche des kontrollierten Datenträgerblatts (344, 402, 514) aufweisen.

## Revendications

1. Procédé de détection optique de défaillances d'alimentation de support dans un appareil (100) de formation d'image, le procédé comprenant :
capturer (602) des images d'une surface d'une feuille de support (344, 402, 514) en train d'être transportée le long d'un trajet (222) d'alimentation de support comme signaux d'image ;
traiter (604) les signaux d'image de la surface de la feuille de support (344, 402, 514) pour détecter des changements de position de la feuille de support (344, 402, 514) ; et
déterminer (606) qu'une défaillance d'alimentation de support s'est produite lorsque les changements de position satisfont à une condition prédéfinie ;
**caractérisé en ce que**
la détermination comprend l'étape consistant à déterminer que la défaillance d'alimentation de support s'est produite lorsque les changements de position comprennent un mouvement vertical dans une direction perpendiculaire à la surface de la feuille de support (344, 402, 514).

2. Procédé selon la revendication 1 dans lequel la détermination comprend l'étape consistant à déterminer que la défaillance d'alimentation de support s'est produite lorsque les changements de position ne correspondent pas à une quantité escomptée de changements de position lorsqu'un mécanisme d'alimentation de l'appareil de formation d'image est commandé pour déplacer la feuille de support (344, 402, 514).

3. Procédé selon la revendication 1 dans lequel la détermination comprend l'étape consistant à déterminer que la défaillance d'alimentation de support s'est produite lorsque les changements de position comprennent un mouvement de rotation.

4. Procédé selon la revendication 1 dans lequel la détermination comprend l'étape consistant à déterminer que la défaillance d'alimentation de support s'est produite lorsque les changements de position comprennent un mouvement latéral, le mouvement latéral étant dans une direction perpendiculaire à la direction du trajet d'alimentation de support et parallèle à la surface de la feuille de support (344, 402, 514).

5. Procédé selon la revendication 1 dans lequel la détermination comprend en outre l'étape consistant à détecter une distorsion optique de la lumière réfléchie à partir de la surface de la feuille de support pour déterminer si les changements de position comprennent le mouvement vertical.

6. Procédé selon la revendication 1 dans lequel la détermination comprend en outre l'étape consistant à déterminer un changement d'un faisceau lumineux réfléchi reçu pour capturer les signaux d'image par rapport à un point de référence pour déterminer si les changements de position comprennent le mouvement vertical.

7. Procédé selon la revendication 1 dans lequel la détermination comprend l'étape consistant à déterminer la force de signal desdits signaux d'image pour déterminer si les changements de position comprennent le mouvement vertical.

8. Procédé selon la revendication 1 comprenant en outre l'étape consistant à réaligner la feuille de support en utilisant les changements de position dérivés des signaux d'image pour corriger la défaillance d'alimentation de support.

9. Système (102) de détection optique de défaillances d'alimentation de support dans un appareil (100) de formation d'image comprenant :
un capteur (226) de poursuite de mouvement optique placé le long d'un trajet (222) d'alimentation de support pour capturer des images d'une surface d'une feuille de support (344, 402, 514), le capteur (226) de poursuite de mouvement optique comprenant un réseau (334) d'éléments photosensibles qui capture les images de la surface de la feuille de support (344, 402, 514) comme signaux d'image ; et
au moins un circuit (228, 338) de traitement connecté de manière opérationnelle au capteur (226) de poursuite de mouvement optique, l'au moins un circuit (228, 338) de traitement étant configuré pour traiter les signaux d'image pour détecter les changements de position de la feuille de support (344, 402, 514) et pour déterminer qu'une défaillance d'alimentation de support s'est produite lorsque les changements de position satisfont à une condition prédéfinie ;
**caractérisé en ce que**
l'au moins un circuit (228, 338) de traitement est configuré pour déterminer que la défaillance d'alimentation de support s'est produite lorsque les changements de position comprennent un mouvement vertical dans une direction perpendiculaire à la surface de la feuille de support (344, 402, 514).

10. Système selon la revendication 9 dans lequel l'au moins un circuit (228, 338) de traitement est configuré pour déterminer que la défaillance d'alimentation de support s'est produite lorsque les changements de position ne correspondent pas à une quantité escomptée de changements de position lorsqu'un mécanisme d'alimentation de l'appareil (100) de formation d'image est commandé pour déplacer la feuille de support (344, 402, 514).

11. Système selon la revendication 9 dans lequel l'au moins un circuit (228, 338) de traitement est configuré pour déterminer que la défaillance d'alimentation de support s'est produite lorsque les changements de position comprennent un parmi un mouvement de rotation et un mouvement latéral, le mouvement latéral étant dans une direction perpendiculaire à la direction du trajet (222) d'alimentation de support et parallèle à la surface de la feuille de support (344, 402, 514).

12. Système selon la revendication 9 dans lequel l'au moins un circuit de traitement comprend un premier circuit (338) de traitement et un deuxième circuit (228) de traitement, le premier circuit (338) de traitement étant intégré dans le capteur (226) de poursuite de mouvement optique, le premier circuit (338) de traitement étant configuré pour détecter les changements de position de la feuille de support, le deuxième circuit de traitement étant connecté de manière opérationnelle au premier circuit de traitement, le deuxième circuit (228) de traitement étant configuré pour déterminer que la défaillance d'alimentation de support s'est produite lorsque les changements de position satisfont à la condition prédéfinie.

13. Système selon la revendication 9 comprenant en outre un deuxième capteur (230) de poursuite de mouvement optique placé le long du trajet (222) d'alimentation de support pour capturer les images d'une deuxième surface de la feuille de support (344, 402, 514).

14. Système selon la revendication 9 comprenant en outre un mécanisme (208, 500) d'alimentation pour déplacer la feuille de support le long du trajet (222) d'alimentation de support, le mécanisme (208, 500) d'alimentation étant configuré pour réaligner la feuille de support (344, 402, 514) pour corriger la défaillance d'alimentation de support.

15. Système selon la revendication 14 dans lequel le mécanisme (208, 500) d'alimentation comprend un rouleau (504) ayant un diamètre variable, le rouleau étant relié à un arbre (512) de sorte que le rouleau (504) puisse être déplacé le long de la longueur de l'arbre (512) pour modifier le diamètre effectif du rouleau (504) pour corriger la défaillance d'alimentation de support.

16. Appareil (100) de formation d'image comprenant :
une cartouche (224) d'encre pour déposer un matériau de formation d'image sur les feuilles de support (344, 402, 514) ;
un mécanisme (208, 500) d'alimentation pour déplacer les feuilles de support (344, 402, 514) le long d'un trajet (222) d'alimentation de support ; et
un système (102) selon la revendication 9 de détection optique de défaillances d'alimentation de support dans l'appareil de formation d'image.

17. Appareil selon la revendication 16 dans lequel l'au moins un circuit (228, 338) de traitement est configuré pour déterminer que la défaillance d'alimentation de support s'est produite lorsque les changements de position ne correspondent pas aux changements de position escomptés lorsque le mécanisme (208, 500) d'alimentation est commandé pour déplacer la feuille de support (344, 402, 514).

18. Appareil (100) selon la revendication 16 dans lequel
un capteur (226) de poursuite de mouvement optique comprend une source lumineuse (332) pour éclairer une région (342) sur la surface de la feuille de support (344, 402, 514) en cours de surveillance ; et
l'image d'une surface de support est une lumière réfléchie à partir de la surface de support qui est reçue par le réseau (334) d'éléments photosensibles ; et
dans lequel des trames capturées de signaux d'image comprennent des informations d'image de caractéristiques de surface éclairée sur la surface de la feuille de support (344, 402, 514) en cours de surveillance.
